# FASCICULE DE BREVET EUROPEEN

(11) **EP 2 707 761 B1**
(45) Date de publication et mention de la délivrance du brevet: **20.12.2017**
(21) Numéro de dépôt: 12720493.1
(22) Date de dépôt: 10.05.2012
(51) Int. Cl.: G01W 1/14, G01F 3/26

(54) **DISPOSITIF DE RECUPERATION D'UN FLUIDE**
FLUIDAUFFANGVORRICHTUNG
DEVICE FOR COLLECTING A FLUID

(30) Priorité: 10.05.2011 FR 1154024
(43) Date de publication de la demande: 19.03.2014
(73) Titulaire: Precis Mecanique Exploitation, 95870 Bezons (FR)
(72) Inventeur: SAELEN, Nicolas, F-95420 La Chapelle en Vexin (FR)
(74) Mandataire: Lavoix
(86) Numéro de dépôt international: PCT/EP2012/058696
(87) Numéro de publication internationale: WO 2012/152892

(56) Documents cités:
- FR-A5- 2 057 190
- US-A- 3 902 564

## Description

La présente invention concerne un dispositif de récupération d'un fluide, du type comprenant un orifice d'écoulement du fluide en communication fluidique avec un dispositif de réception dudit fluide, ledit dispositif comprenant un premier et un deuxième augets et étant monté en rotation entre une première position, dans laquelle le fond du premier auget est en regard de l'orifice d'écoulement, et une deuxième position, dans laquelle le fond du deuxième auget est en regard de l'orifice d'écoulement, le passage d'une position à l'autre se faisant lorsque l'un des augets contient une quantité prédéterminée de fluide entraînant son basculement, chaque auget présentant une paroi de déversement s'étendant à partir du fond dudit auget selon une direction opposée à l'autre auget.

La présente invention concerne également un dispositif de mesure de la quantité d'un fluide écoulé pendant un intervalle de temps donné comprenant un tel dispositif de récupération.

La présente invention concerne également un pluviomètre comprenant un tel dispositif de mesure.

L'invention s'applique plus particulièrement à un dispositif de récupération du type « à auget basculeur », notamment utilisé dans un dispositif de mesure du type pluviomètre.

Un tel dispositif de récupération comprend un collecteur, récupérant le fluide, par exemple des eaux de pluie, en communication fluidique avec un ensemble basculant comprenant deux augets par l'intermédiaire d'un orifice d'écoulement du fluide. L'un des augets se trouve en regard de l'orifice d'écoulement et se remplit du fluide s'écoulant par cet orifice. Lorsque l'auget contient une quantité prédéterminée de fluide, l'ensemble basculant bascule du fait du poids du fluide dans l'auget de sorte que l'autre auget se trouve ensuite en regard de l'orifice d'écoulement et se remplit à son tour du fluide s'écoulant par cet orifice. Le premier auget passe, quant à lui, dans une position de déversement, dans laquelle il se vide de son contenu. Lorsque le deuxième auget contient la quantité prédéterminée de fluide, l'ensemble basculant bascule de nouveau de sorte à placer le premier auget en position de remplissage et le deuxième auget en position de déversement.

Un tel dispositif de récupération du fluide peut être utilisé dans un dispositif de mesure, lorsque le passage du premier et du deuxième augets dans leur position de déversement entraîne la fermeture alternative d'un circuit électrique. En enregistrant les fermetures et ouvertures du circuit électrique, c'est-à-dire en « comptant » les basculements de l'ensemble basculant, il est donc possible de mesurer la quantité de fluide déversée par l'orifice d'écoulement pendant un intervalle de temps donné, car la contenance des augets en fluide est connue au moment du basculement. Dans le cas d'un pluviomètre, cette mesure permet alors d'estimer la quantité de précipitations tombées pendant cet intervalle de temps. Deux exemples de pluviomètre sont décrits dans les documents FR 2 057 190 A5 et US 3,902,564. Cependant, le dispositif de récupération décrit ci-dessus n'est pas satisfaisant, , notamment dans le cas où le débit du fluide est important, par exemple lors de fortes précipitations de pluie. En effet, lors du basculement de l'ensemble basculant, le fluide continue de s'écouler par l'orifice d'écoulement et continue de remplir l'auget qui se trouvait en regard jusqu'à ce que l'autre auget arrive en regard de cet orifice. Ce remplissage de l'auget au-delà de sa contenance prévue pour entraîner le basculement peut entraîner des pertes de fluide à récupérer, notamment lorsque ce remplissage entraîne un débordement de l'auget ou des éclaboussures hors de l'auget.

Lorsqu'un tel dispositif de récupération est utilisé dans un dispositif de mesure, celui-ci n'est pas suffisamment précis. En effet, la quantité de fluide déversée dans l'auget en cours de basculement, c'est-à-dire au-delà de la contenance de l'auget prévue pour entraîner son basculement, n'est pas mesurée puisque la mesure ne tient compte que de la quantité de fluide prévue pour déclencher le basculement de l'ensemble basculant. Ainsi, on obtient des imprécisions dans la mesure de la quantité de fluide écoulé.

L'un des buts de l'invention est de pallier cet inconvénient en proposant un dispositif de récupération n'entraînant pas de perte de fluide et un dispositif de mesure de la quantité de fluide écoulée pendant un intervalle de temps donné dont la précision est améliorée, notamment en améliorant le dynamisme du basculement du dispositif.

A cet effet, l'invention concerne un dispositif de récupération du type précité, dans lequel le dispositif de réception comprend en outre un premier et un deuxième déflecteurs, interposés respectivement entre le premier et le deuxième augets et l'orifice d'écoulement du fluide, le premier, respectivement le deuxième, déflecteur comprenant une paroi de déflection agencée pour déporter l'écoulement du fluide sur une zone de la paroi de déversement du premier, respectivement du deuxième, auget décalée par rapport au fond dudit auget lorsque le dispositif est dans sa première, respectivement sa deuxième, position.

Le fait de prévoir un déflecteur en regard de chaque auget agencé pour déporter l'écoulement de fluide sur une zone de la paroi de déversement écartée du fond permet de dynamiser le passage de la première à la deuxième positions. Le basculement se fait de façon plus rapide car le poids de la portion de fluide enclenchant le basculement agit sur une zone éloignée de l'axe de rotation du dispositif de réception, ce qui permet de déclencher le basculement plus rapidement que lorsque le fluide remplit l'auget par le fond. Ainsi, le passage d'une position à l'autre se fait de façon plus rapide et une quantité négligeable de fluide remplit le premier auget entre le début du basculement et le moment où le deuxième auget arrive en regard de l'orifice d'écoulement. La quantité de fluide dépassant la contenance de l'auget prévue pour entraîner son basculement est donc fortement réduite et les performances du dispositif de récupération sont très nettement améliorées.

Selon d'autres caractéristiques du dispositif de mesure de l'invention :
- chaque déflecteur comprend en outre une paroi de déversement, la paroi de déversement du deuxième déflecteur étant en communication fluidique avec le premier auget, lorsque le dispositif de réception est dans sa première position, et la paroi de déversement du premier déflecteur étant en communication fluidique avec le deuxième auget, lorsque le dispositif de réception est dans sa deuxième position ;
- les parois de déversement sont agencées pour retenir le fluide entre elles lorsque le dispositif de réception est dans une position intermédiaire entre la première et la deuxième position ;
- la paroi de déversement d'un déflecteur s'étend à partir du bord en regard de l'orifice d'écoulement de la paroi de déflection vers les augets ;
- l'angle formé entre la paroi de déflection et la paroi de déversement d'un déflecteur est sensiblement compris entre 40° et 48° ;
- le premier, respectivement le deuxième, déflecteur est mobile en rotation de sorte que l'extrémité libre du premier, respectivement du deuxième, déflecteur se rapproche du fond du premier, respectivement du deuxième, auget lors du passage de la première à la deuxième position, respectivement de la deuxième à la première position ;
- le premier et le deuxième augets comprennent une paroi commune, l'intersection entre la paroi commune et la paroi de déversement du premier, respectivement du deuxième, auget formant le fond dudit premier, respectivement dudit deuxième, auget, le premier et le deuxième augets étant sensiblement symétriques l'un de l'autre par rapport à un plan de symétrie passant par ladite paroi commune ; et
- le premier, respectivement le deuxième, auget entre en contact avec une butée lors du passage de la première à la deuxième position, respectivement de la deuxième à la première position, ladite butée étant mobile en rotation sous l'effet du contact avec l'auget, de sorte à amortir le contact entre ledit auget et ladite butée.

L'invention concerne également un dispositif de mesure de la quantité d'un fluide écoulé pendant un intervalle de temps donné, comprenant un dispositif de récupération tel que décrit ci-dessus et des moyens de mesure de la quantité de fluide écoulé pendant un intervalle de temps donné en fonction du basculement des augets du dispositif de récupération.

Un tel dispositif de mesure présente une précision grandement améliorée, car la quantité de fluide déversée dans l'auget en cours de basculement est fortement réduite. La quantité de fluide non mesurée devient donc négligeable.

Selon une autre caractéristique du dispositif de mesure, les moyens de mesure de la quantité de fluide, écoulé pendant un intervalle de temps donné, en fonction du basculement des augets, comprennent des moyens de fermeture d'un circuit électrique agencés pour fermer ledit circuit alternativement lorsque le dispositif de réception est dans la première et dans la deuxième positions.

L'invention concerne également un pluviomètre comprenant un dispositif de mesure tel que décrit ci-dessus, l'orifice d'écoulement du fluide dudit dispositif étant agencé pour recevoir une partie des précipitations dont la quantité est à mesurer.

D'autres aspects et avantages de l'invention apparaîtront à la lecture de la description qui suit, donnée à titre d'exemple et faite en référence aux dessins annexés, dans lesquels :
- la Fig. 1 est une représentation schématique en coupe du dispositif de mesure selon l'invention dans une première position,
- la Fig. 2 est une représentation schématique agrandie de la zone II de la Fig. 1,
- la Fig. 3 est une représentation schématique en coupe du dispositif de la Fig. 1 dans une position intermédiaire,
- la Fig. 4 est une représentation schématique agrandie de la zone IV de la Fig. 3,

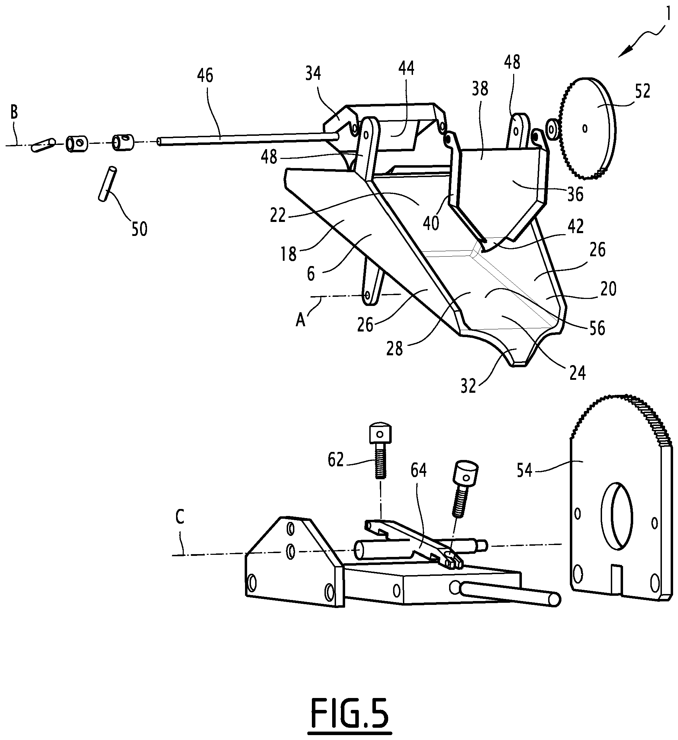

- la Fig. 5 est une représentation schématique en perspective éclatée du dispositif de mesure des Fig. 1 et 2, et

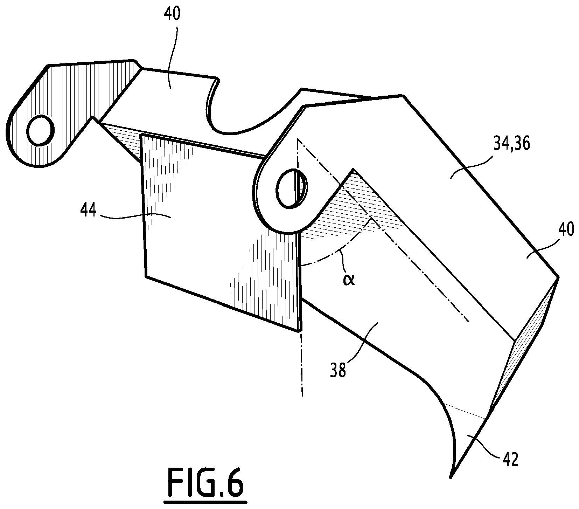

- la Fig. 6 est une représentation schématique en perspective d'un déflecteur utilisé dans le dispositif de mesure des Fig. 1 et 2.

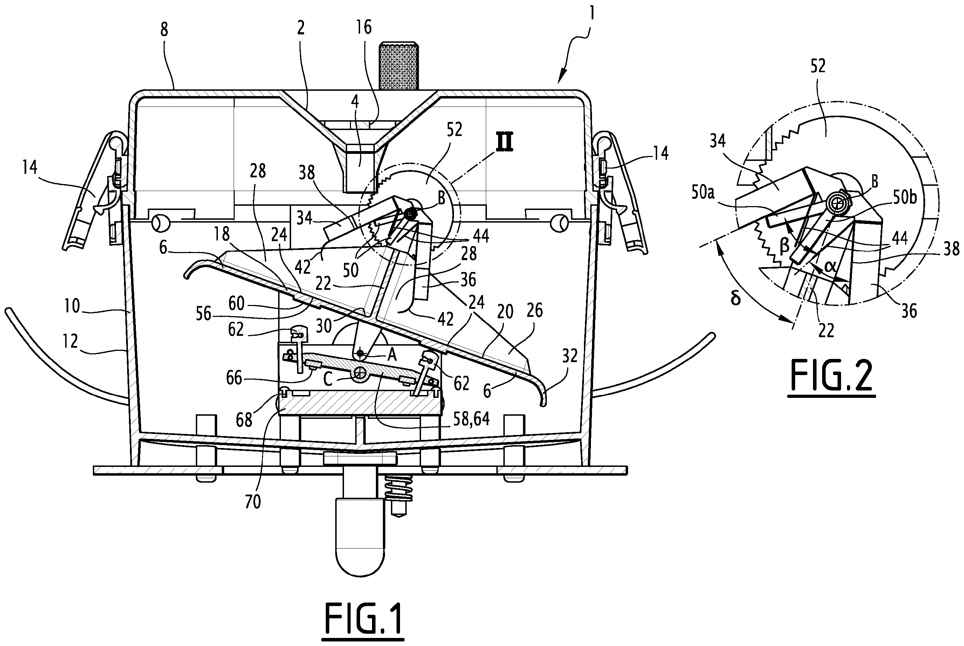

En référence aux Fig. 1 à 3, on décrit un dispositif de récupération 1 d'un fluide, par exemple utilisé dans un dispositif de mesure de la quantité du fluide écoulé pendant un intervalle de temps donné, par exemple du type pluviomètre. La description sera faite en référence à un pluviomètre destiné à mesurer la quantité de précipitations tombées pendant un intervalle de temps donné, c'est-à-dire à mesurer une quantité d'eau de pluie, ou de fusion de neige ou de grêle. Il est cependant bien entendu que le dispositif de récupération peut être utilisé dans d'autres types d'application. De même, le dispositif de mesure peut être utilisé pour d'autres applications nécessitant la mesure d'une quantité de fluide écoulé pendant un intervalle de temps donné.

Le dispositif de récupération 1 comprend un collecteur 2 muni d'un orifice d'écoulement 4 par lequel l'eau captée par le collecteur est destinée à s'écouler vers un dispositif de réception 6 de l'eau en communication fluidique avec l'orifice d'écoulement 4.

Le collecteur 2 est par exemple formé dans le couvercle 8 d'un boîtier 10 à l'intérieur duquel le dispositif de réception 6 est placé. Ce boîtier 10 comprend un corps 12 fermé de façon étanche par le couvercle 8 au moyen de moyens de fixation 14 amovibles permettant l'ouverture et la fermeture du couvercle 8 pour des interventions de maintenance à l'intérieur de celui-ci. L'orifice d'écoulement 4 est percé dans le couvercle 8 et forme un passage pour l'eau entre l'extérieur et l'intérieur du boîtier 10.

Le collecteur 2 présente une forme d'entonnoir au fond duquel s'étend l'orifice d'écoulement 4, l'eau s'écoulant par ledit orifice 4 par l'effet de la gravité. Selon un mode de réalisation, un grillage 16 est disposé au-dessus de l'orifice 4 afin d'éviter que des poussières, des insectes ou autres débris ne passent par l'orifice 4 vers l'intérieur du boîtier 10. L'orifice d'écoulement 4 présente un diamètre sensiblement compris entre 8 mm et 12 mm. Selon un mode de réalisation, l'orifice d'écoulement 4 présente un diamètre sensiblement égal à 10 mm. On notera que la dimension de l'orifice 4 est plus importante que dans les pluviomètres classiques, dans lesquels l'orifice présente généralement un diamètre sensiblement compris entre 2 mm et 5 mm. L'augmentation du diamètre de l'orifice 4, permettant la mesure de la quantité d'eau à des débits plus élevés, est permise du fait de la structure particulière du dispositif de réception de l'invention, comme cela sera décrit ultérieurement.

Le dispositif de réception 6 est un dispositif de type à augets basculants. Il comprend ainsi un premier auget 18 et un deuxième auget 20 séparés par une paroi commune 22 qui s'étend sensiblement dans un plan de symétrie du dispositif de réception 6. Le premier auget 18 et le deuxième auget 20 sont donc sensiblement symétriques l'un de l'autre par rapport à la paroi commune 22. Chaque auget comprend une paroi de déversement 24 s'étendant sensiblement perpendiculairement à la paroi commune 22 vers les bords du boîtier 10. C'est-à-dire que la paroi de déversement 24 d'un auget s'étend à partir du fond de l'auget selon une direction opposée à l'autre auget. La paroi commune 22 s'étend vers l'orifice d'écoulement 4 à partir des parois d'écoulement 24. Chaque auget comprend en outre deux parois latérales 26 s'étendant de part et d'autre de la paroi d'écoulement sensiblement perpendiculairement à la paroi commune 22 et à la paroi d'écoulement 24, de sorte à définir, avec la paroi d'écoulement 24 et la paroi commune 22, un volume de réception du fluide 28. L'intersection entre la paroi commune 22 et la paroi d'écoulement 24 définit le fond 30 de l'auget. Chaque paroi latérale 26 s'étend sensiblement de l'extrémité libre de la paroi commune 22 à l'extrémité libre de la paroi d'écoulement 24, de sorte que chaque auget présente une section ayant la forme d'un triangle rectangle dont l'angle droit est formé par le fond 30, comme représenté sur les Fig. 1 et 2. Un bec verseur 32 est par exemple prévu en partie extrême libre de la paroi d'écoulement 24, afin de faciliter l'écoulement de l'eau lors de la vidange d'un auget, comme cela sera décrit ultérieurement.

Le dispositif de réception 6 est monté mobile en rotation dans le boîtier 10, autour d'un axe A horizontal s'étendant dans le plan de symétrie défini par la paroi commune 22, sous les parois d'écoulement 24 des premier 18 et deuxième 20 augets. Le dispositif de réception 6 est ainsi mobile entre une première position (Fig. 1) et une deuxième position, en passant par une position intermédiaire (Fig. 2).

Dans la première position, le fond 30 du premier auget 18 se trouve en regard de l'orifice d'écoulement 4 et la paroi d'écoulement 24 du premier auget 18 s'étend vers le haut, de sorte que le premier auget 18 est apte à retenir l'eau se déversant dans le premier auget 18 par l'orifice d'écoulement 4. Le premier auget 18 est donc dans une position de remplissage. Dans la première position, la paroi d'écoulement 24 du deuxième auget 20 s'étend vers le bas de sorte que le deuxième auget 20 se vide de son contenu par l'effet de la gravité, l'eau se déversant du deuxième auget 20 par son bec verseur 32. Le deuxième auget 20 est donc dans une position de déversement.

Dans la deuxième position, le fond 30 du deuxième auget 20 se trouve en regard de l'orifice d'écoulement 4 et la paroi d'écoulement 24 du deuxième auget 20 s'étend vers le haut, de sorte que le deuxième auget 20 est apte à retenir l'eau se déversant dans le deuxième auget 20 par l'orifice d'écoulement 4. Le deuxième auget 20 est donc dans une position de remplissage. Dans la deuxième position, la paroi d'écoulement 24 du premier auget 18 s'étend vers le bas de sorte que le premier auget 18 se vide de son contenu par l'effet de la gravité, l'eau se déversant du premier auget 18 par son bec verseur 32. Le premier auget 18 est donc dans une position de déversement.

La position intermédiaire est définie comme étant la position dans laquelle la paroi commune 22 s'étend sensiblement verticalement et les parois d'écoulement 24 s'étendent sensiblement horizontalement. Dans cette position, la paroi commune 22 s'étend sensiblement selon l'axe de l'orifice d'écoulement 4 au droit de celui-ci, comme représenté sur la Fig. 2.

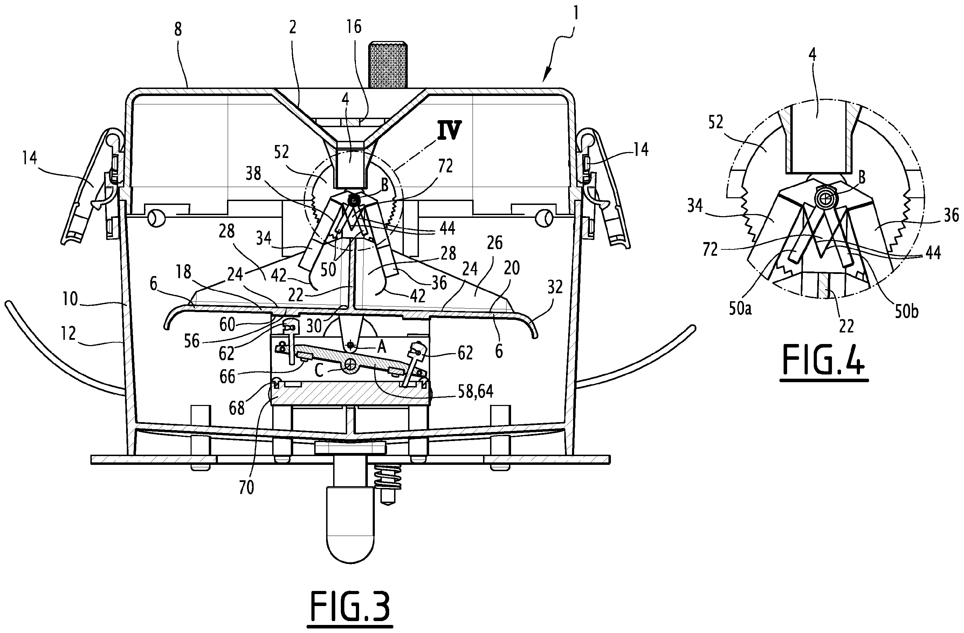

Le dispositif de réception 6 comprend en outre un premier déflecteur 34, interposé entre le premier auget 18 et l'orifice d'écoulement 4, et un deuxième déflecteur 36, interposé entre le deuxième auget 20 et l'orifice d'écoulement 4. Les deux déflecteurs 34, 36 sont identiques et comme représentés sur la Fig. 4. Ils sont montés de façon symétrique par rapport au plan de symétrie du dispositif de réception 6.

Chaque déflecteur comprend une paroi de déflection 38 formant un angle avec l'axe de l'orifice d'écoulement 4 de sorte à orienter l'eau s'écoulant verticalement par l'orifice d'écoulement 4 vers la paroi d'écoulement 24 de l'auget correspondant selon une pente prédéfinie. La paroi de déflection 38 est bordée par des parois latérales 40 s'étendant sensiblement perpendiculairement à la paroi de défection 38 et agencées pour canaliser l'eau et la diriger vers la partie extrême libre de la paroi de déflection 38, qui se termine par un bec verseur 42.

La paroi de déflection 38 présente une première partie sensiblement rectangulaire disposée en regard du fond 30 de l'auget en regard duquel s'étend le déflecteur. Cette première partie permet d'éviter les écoulements de fluide de part et d'autre du déflecteur vers l'extérieur de celui-ci. La paroi de déflection 38 comprend en outre une deuxième partie, dans la continuité de la première partie, dans laquelle les bords de la paroi de déflection 38 portant les parois latérales se rapprochent progressivement l'une de l'autre, de façon à guider le fluide vers le bec verseur 42. Selon un mode de réalisation, la deuxième partie présente une forme sensiblement trapézoïdale, la grande base du trapèze étant formée par un bord de la première partie et la petite base étant formée par l'extrémité libre de la paroi de déflexion 38 se terminant par le bec verseur. Selon un mode de réalisation, la longueur de la petite base est sensiblement égale à 1/3 de la longueur de la grande base.

Selon un mode de réalisation, les parois latérales 40 s'étendent sensiblement parallèlement l'une à l'autre et comprennent chacune une première partie, s'étendant le long de la première partie de la paroi de déflection 38, de forme sensiblement rectangulaire et une deuxième partie, s'étendant le long de la deuxième partie de la paroi de déflection 38, formant un trapèze rectangle. La grande base de la deuxième partie est formée par un bord de la première partie et la petite base est formée par l'extrémité libre de la deuxième partie au droit de l'extrémité libre de la paroi de déflexion 38. Selon un mode de réalisation, l'angle formé entre la grande base et le bord libre de la deuxième partie de chaque paroi latérale est sensiblement égal à 25°.

Le bec verseur 42 présente des bords, dans la continuité de la paroi de déflexion 38, ayant sensiblement la forme d'un quart de cercle orienté vers l'auget et se rapprochant l'un de l'autre, de sorte à former une extrémité en pointe. Cette forme permet d'orienter l'écoulement du fluide de sorte qu'il quitte le bec verseur 42 précisément à la pointe de celui-ci, afin d'éviter toute accumulation de fluide à une extrémité du déflecteur.

Chaque déflecteur comprend en outre une paroi de déversement 44 s'étendant à partir du bord en regard de l'orifice d'écoulement 4 de la paroi de déflection 38 vers les augets. La paroi de déversement 44 s'étend donc vers le bas à partir de la paroi de déflection 38 à l'opposé du bec verseur 42. La paroi de déversement 44 et la paroi de déflection 38 forment entre elles un angle α sensiblement compris entre 40° et 48°. Selon un mode de réalisation, l'angle α est sensiblement égal à 45°. Quand l'auget n'est pas en position de déversement, l'extrémité de la paroi de déversement 44 dépasse le plan de la paroi commune 22 des augets sans toucher la partie supérieure de celle-ci.

Chaque déflecteur est monté libre en rotation autour d'un axe 46 s'étendant selon un axe B sensiblement parallèle à l'axe de rotation A. Un espace sensiblement égal à 3 mm sépare l'axe 46 du bord de chaque déflecteur 34, 36 en regard de l'orifice d'écoulement, lesdits bords étant parallèles audit axe 46. L'axe 46 est lui-même monté en rotation autour de l'axe B sur deux flasques 48 s'étendant à partir de la paroi commune 22, au droit de celle-ci, vers l'orifice d'écoulement et sensiblement dans la continuité des parois latérales 26 des augets 18 et 20. L'axe 46 porte à chacune de ses extrémités un élément de support 50a, 50b solidaire en rotation de l'axe 46. Lorsque le premier auget 18 est en position de remplissage, l'un des éléments de support 50a s'étend vers le bas et vers le premier auget 18, en formant un angle β, sensiblement égal à 50°, avec le plan de symétrie du dispositif de réception 6 passant par l'axe 46, et l'autre élément de support 50b s'étend vers le bas et vers le deuxième auget 20, en formant un angle sensiblement égal à 25° avec le plan de symétrie du dispositif de réception 6. Chaque élément de support 50 s'étend ainsi sous une paroi de déflection 38 d'un des déflecteurs 34, 36.

L'axe 46 est solidaire en rotation d'une roue d'engrenage 52 qui engrène avec un engrenage 54 solidaire en rotation des augets 18 et 20. Ainsi, on comprend que la rotation des augets 18 et 20 entre la première et la deuxième positions entraîne une rotation de l'axe 46 par l'intermédiaire de l'engrenage 54 et de la roue d'engrenage 52. La rotation de l'axe 46 est agencée pour qu'en première position, le premier déflecteur 34 repose sur l'élément de support 50a orienté vers le premier auget 18, de sorte que sa paroi de déflection 38 forme un angle δ, sensiblement égal à 40°, avec le plan de symétrie du dispositif de réception 6 et, en deuxième position, le deuxième déflecteur 36 repose sur l'élément de support 50b orienté vers le deuxième auget 20, de sorte que sa paroi de déflection 38 forme également l'ange δ avec le plan de symétrie du dispositif de réception 6. Le contact entre un élément de support 50a, 50b, de forme sensiblement cylindrique, et le déflecteur correspondant se fait en un point de la première partie de la paroi de déflection 38 de ce déflecteur et non selon une ligne. La longueur de chaque élément de support 50a, 50b est sensiblement comprise entre la moitié et les deux tiers de la longueur de la première partie de la paroi de déflection 38. En première position, le deuxième déflecteur 36 est rabattu vers la paroi commune 22 et en deuxième position, le premier déflecteur 34 est rabattu vers la paroi commune 22. Ainsi, lors du passage de la première position à la deuxième position, l'élément de support 50 orienté vers le premier auget 18 libère le premier déflecteur 34, qui se rapproche alors du fond 30 du premier auget 18, pendant que l'élément de support 50 orienté vers le deuxième auget soulève le deuxième déflecteur 36 de sorte à placer sa paroi de déflection 38 dans la position indiquée ci-dessus, et inversement lors du passage de la deuxième à la première position.

Ainsi, dans la première position, l'eau qui s'écoule de l'orifice d'écoulement 4 tombe sur la paroi de déflection 38 du premier déflecteur 34 qui oriente l'eau vers son bec verseur 42 selon la pente définie par l'ange δ. L'eau s'écoule ensuite par le bec verseur 42 sur la paroi de déversement 24 du premier auget 18 et remplie le premier auget 18. Dans la première position, le bec verseur 42 du premier déflecteur 34 se trouve en regard d'une zone 56 de la paroi de déversement 24 qui est décalée par rapport au fond 30 du premier auget 18, comme représenté sur la Fig. 1. Par décalée, on entend qu'une distance prédéfinie sépare la zone 56 du fond 30 de l'auget. Ainsi, l'eau ne s'écoule par directement dans le fond 30 du premier auget 18 mais tombe sur la zone 56, qui se trouve par exemple sensiblement au centre de la paroi de déversement 24 du premier auget 18.

Lorsque le premier auget 18 comprend une quantité prédéfinie d'eau, le poids de cette quantité d'eau entraîne le basculement du dispositif de réception 6 vers la deuxième position. Selon un mode de réalisation, la masse d'eau, dont le poids entraîne ce basculement, c'est-à-dire la capacité du premier auget, est sensiblement égale à 20 g.

Dans la deuxième position, l'eau qui s'écoule de l'orifice d'écoulement 4 tombe sur la paroi de déflection 38 du deuxième déflecteur 36 qui oriente l'eau vers son bec verseur 42 selon la pente définie par l'ange δ. L'eau s'écoule ensuite par le bec verseur 42 sur la paroi de déversement 24 du deuxième auget 20 et remplie le deuxième auget 20. Dans la deuxième position, le bec verseur 42 du deuxième déflecteur 36 se trouve en regard d'une zone 56 de la paroi de déversement 24 qui est décalée par rapport au fond 30 du deuxième auget 20. Par décalée, on entend qu'une distance prédéfinie sépare la zone 56 du fond 30 de l'auget. Ainsi, l'eau ne s'écoule par directement dans le fond 30 du deuxième auget 20 mais tombe sur la zone 56, qui se trouve par exemple sensiblement au centre de la paroi de déversement 24 du deuxième auget 20. Dans cette deuxième position, la paroi de déversement 24 du premier auget 18 est, quant à elle, orientée vers le bas, ce qui entraîne l'évacuation de l'eau contenue dans le premier auget 18 par le bec verseur 32 du premier auget 18.

On comprend que lorsque le deuxième auget 20 comprend la quantité prédéfinie d'eau correspondant à la capacité des augets, le poids de cette quantité d'eau entraîne le basculement du dispositif de réception 6 vers la première position, de sorte que le premier auget 18 se remplit à nouveau, pendant que le deuxième auget 20 se vide.

Les déflecteurs 34 et 36 permettent d'améliorer les performances de récupération de l'eau en étant adapté à des grands débits et en améliorant le dynamisme du dispositif de réception 6. En effet, tout d'abord ces déflecteurs permettent de canaliser l'eau s'écoulant de l'orifice d'écoulement 4, ce qui permet d'augmenter son diamètre, sans perte ou risque d'éclaboussement de l'eau hors des augets 18 et 20. Ainsi, l'orifice d'écoulement 4 peut être adapté à de plus forts débits d'eau. En outre, le fait que les déflecteurs 34 et 36 permettent de remplir les augets 18 et 20 par leur zone 56 et non par leur fond 30 améliorer le dynamisme du passage du dispositif de réception 6 d'une position à l'autre. En effet, comme déjà expliqué précédemment, le dispositif de réception 6 peut basculer plus vite, ce qui limite la quantité d'eau qui continue de remplir un auget au-delà de sa capacité lors du passage d'une position à l'autre.

Lorsque le dispositif de récupération décrit ci-dessus est utilisé dans un dispositif de mesure, la précision du dispositif de mesure est améliorée parce que les pertes d'eau, qui pourraient entraîner des erreurs de mesure, sont fortement limitées et parce que le dispositif limite la quantité d'eau remplissant l'auget au-delà de sa capacité de l'auget, cette quantité d'eau au-delà de la capacité d'un auget n'étant pas mesurée.

Le passage alternatif de la première à la deuxième positions et de la deuxième à la première positions permet de mesurer la quantité d'eau écoulée pendant un intervalle de temps donné en ajoutant au dispositif de récupération 1 des moyens de mesure agencés pour compter les basculements des augets 18 et 20.

Ces moyens de mesure comprennent des moyens de fermeture d'un circuit électrique 70 actionnés par un balancier, comprenant deux aimants, basculant sous l'effet du passage de la première à la deuxième positions et de la deuxième à la première positions. Un patin de butée 60 est fixé sous chaque paroi de déversement 24 des augets 18 et 20, par exemple sensiblement en regard de la zone 56 desdites parois 24. Chaque patin de butée 60 vient en appui sur une butée 62 montée en regard sur un balancier 64 monté en rotation autour d'un axe C sensiblement parallèle à l'axe A lorsque la paroi de déversement 24, sur laquelle le patin de butée 60 est fixé, est dans sa position de déversement, c'est-à-dire dans la deuxième position pour la paroi de déversement 24 du premier auget 18 et dans la première position pour la paroi de déversement 24 du deuxième auget 20 (Fig. 1). Cet appui entre le patin de butée 60 et la butée 62 entraîne un basculement du balancier 64 qui porte à ses extrémités des aimants 66 montés en pôles inversés. Pendant la phase de basculement, un des deux aimants 66, du fait de son éloignement du circuit 70, modifie l'état du contact d'un interrupteur à lame souple inverseur. L'autre aimant 66, en se rapprochant d'un deuxième contact inverseur, modifie l'état de ce contact. Du fait de l'hystérésis des interrupteurs à lame souple et des entrefers ampoule-aimant ainsi que la sensibilité de l'ampoule des interrupteurs à lame souple, il existe une phase pendant le basculement où les contacts restent normalement fermés, créant un contact dans le circuit électrique suffisamment long pour être détecté.

En plus de permettre la fermeture alternative du circuit électrique 70, le balancier permet d'amortir le rebond du dispositif de réception 6 lorsqu'il arrive en fin de course, c'est-à-dire lorsqu'il arrive en première ou en deuxième position. Cet amortissement permet d'améliorer le dynamisme du dispositif de réception 6 et d'éviter des pertes d'eau lors de ce rebond, ce qui entraînerait une mauvaise récupération de l'eau et des erreurs de mesure.

La mesure de la quantité d'eau écoulée pendant un intervalle de temps donné se fait ensuite de façon classique et ne sera pas décrite plus en détail ici.

Lors du passage de la première à la deuxième positions et de la deuxième à la première position, le dispositif de réception 6 passe dans une position intermédiaire représentée sur la Fig. 2, comme décrit précédemment. Dans cette position, les parois de déversement 44 de chaque déflecteur 34 et 36 sont en contact l'une avec l'autre par leur bord libre, c'est-à-dire leur bord opposé à la paroi de déflection 38. Dans cette position, les parois de déversement 44 forment un volume de réception temporaire 72, l'eau s'écoulant par l'orifice d'écoulement 4 pendant le passage de la première à la deuxième position et inversement étant retenue prisonnière dans ce volume temporaire 72 et évitant ainsi de remplir l'un des augets au-delà de sa capacité, ce qui fausserait la mesure, la quantité d'eau remplissant un auget au-delà de sa capacité n'étant mesurée.

Dans la première position, la paroi de déversement 44 du deuxième déflecteur 36 est en communication fluidique avec le premier auget 18. C'est-à-dire que, dans cette position, l'eau qui était retenue prisonnière dans le volume de réception 72 s'écoule dans le premier auget 18 grâce à la paroi d'écoulement 44 du deuxième déflecteur 36.

Dans la deuxième position, la paroi de déversement 44 du premier déflecteur 34 est en communication fluidique avec le deuxième auget 20. C'est-à-dire que, dans cette position, l'eau qui était retenue prisonnière dans le volume de réception 72 s'écoule dans le deuxième auget 20 grâce à la paroi d'écoulement 44 du premier déflecteur 34.

Ainsi, la quantité d'eau qui s'écoule par l'orifice d'écoulement 4 lors du passage entre la première et la deuxième positions et inversement n'entraîne pas de pertes puisqu'elle remplit l'auget dans sa position de remplissage avant que la quantité d'eau ne soit égale à la capacité de l'auget.

Dans un dispositif de mesure, cette quantité d'eau est bien mesurée. On améliore ainsi fortement la précision du dispositif de mesure en limitant de façon importante la quantité d'eau qui n'est pas prise en compte lors de la mesure, du fait du passage d'une position à l'autre.

A titre d'exemple, le dispositif de mesure, lorsqu'il est utilisé pour mesurer une quantité d'eau pluviale canalisée sur 1000 cm² et avec des augets dont la quantité d'eau prédéfinie est égale à 20 g, c'est-à-dire dans le cas d'un pluviomètre par exemple, présente une marge d'erreur de 0 à -2 % pour des débits pluviaux allant jusqu'à 100 mm par heure, de 0 à -3 % entre 100 mm et 500 mm par heure, de 0 à +5 % jusqu'à 1200 mm par heure.

On comprend donc que l'on peut utiliser un dispositif de mesure tel que décrit ci-dessus dans un pluviomètre destiné à mesurer des fortes précipitations, par exemple en milieu tropical. Avec une captation sur 400 cm2 et une résolution qui reste acceptable, le pluviomètre est capable de mesurer avec précision des intensités pluviales dépassant les 40 mm par minute (soit plus que le record mondial connu à ce jour).

En outre, le pluviomètre n'a pas besoin de source d'énergie particulière pour fonctionner, il peut donc être laisser en pleine nature pendant longtemps avant de nécessiter des opérations d'entretien. De même, le fait que l'orifice d'écoulement 4 puisse avoir un diamètre agrandi par rapport aux dispositifs de mesure classiques limite les risques de bouchage de cet orifice, ce qui réduit les opérations d'entretien nécessaires au bon fonctionnement du dispositif de mesure.

Comme indiqué précédemment, le dispositif de mesure a été décrit en relation avec des mesures de quantités d'eau écoulées, cependant un tel dispositif peut être utilisé avec d'autres fluides homogènes.

## Revendications

1. Dispositif de récupération (1) d'un fluide, comprenant un orifice d'écoulement (4) du fluide en communication fluidique avec un dispositif de réception (6) dudit fluide, ledit dispositif comprenant un premier (18) et un deuxième (20) augets et étant monté en rotation entre une première position, dans laquelle le fond (30) du premier auget (18) est en regard de l'orifice d'écoulement (4), et une deuxième position, dans laquelle le fond (30) du deuxième auget (20) est en regard de l'orifice d'écoulement (4), le passage d'une position à l'autre se faisant lorsque l'un des augets (18, 20) contient une quantité prédéterminée de fluide entraînant son basculement, chaque auget (18, 20) présentant une paroi de déversement (24) s'étendant à partir du fond (30) dudit auget (18, 20) selon une direction opposée à l'autre auget (18, 20), **caractérisé en ce que** le dispositif de réception (6) comprend en outre un premier (34) et un deuxième (36) déflecteurs, interposés respectivement entre le premier (18) et le deuxième (20) augets et l'orifice d'écoulement (4) du fluide, le premier (34), respectivement le deuxième (36), déflecteur comprenant une paroi de déflection (38) agencée pour déporter l'écoulement du fluide sur une zone (56) de la paroi de déversement (24) du premier (18), respectivement du deuxième (20), auget décalée par rapport au fond (30) dudit auget lorsque le dispositif (6) est dans sa première, respectivement sa deuxième, position.

2. Dispositif de récupération selon la revendication 1, **caractérisé en ce que** chaque déflecteur (34, 36) comprend en outre une paroi de déversement (44), la paroi de déversement (44) du deuxième déflecteur (36) étant en communication fluidique avec le premier auget (18), lorsque le dispositif de réception (6) est dans sa première position, et la paroi de déversement (44) du premier déflecteur (34) étant en communication fluidique avec le deuxième auget (20), lorsque le dispositif de réception (6) est dans sa deuxième position.

3. Dispositif de récupération selon la revendication 2, **caractérisé en ce que** les parois de déversement (44) sont agencées pour retenir le fluide entre elles lorsque le dispositif de réception (6) est dans une position intermédiaire entre la première et la deuxième position.

4. Dispositif de récupération selon la revendication 2 ou 3, **caractérisé en ce que** la paroi de déversement (44) d'un déflecteur (34, 36) s'étend à partir du bord en regard de l'orifice d'écoulement (4) de la paroi de déflection (44) vers les augets (18, 20).

5. Dispositif de récupération selon la revendication 4, **caractérisé en ce que** l'angle (α) formé entre la paroi de déflection (38) et la paroi de déversement (44) d'un déflecteur (34, 36) est sensiblement compris entre 40° et 48°.

6. Dispositif de récupération selon l'une quelconque des revendication 1 à 5, **caractérisé en ce que** le premier (34), respectivement le deuxième (36), déflecteur est mobile en rotation de sorte que l'extrémité libre du premier (34), respectivement du deuxième (36), déflecteur se rapproche du fond (30) du premier (18), respectivement du deuxième (20), auget lors du passage de la première à la deuxième position, respectivement de la deuxième à la première position.

7. Dispositif de récupération selon l'une quelconque des revendications 1 à 6, **caractérisé en ce que** le premier et le deuxième augets (18, 20) comprennent une paroi commune (22), l'intersection entre la paroi commune (22) et la paroi de déversement (24) du premier (18), respectivement du deuxième (20), auget formant le fond (30) dudit premier (18), respectivement dudit deuxième (20), auget, le premier et le deuxième augets (18, 20) étant sensiblement symétriques l'un de l'autre par rapport à un plan de symétrie passant par ladite paroi commune (22).

8. Dispositif de récupération selon l'une quelconque des revendications 1 à 7, **caractérisé en ce que** le premier (18), respectivement le deuxième (20), auget entre en contact avec une butée (62) lors du passage de la première à la deuxième position, respectivement de la deuxième à la première position, ladite butée (62) étant mobile en rotation sous l'effet du contact avec l'auget (18, 20), de sorte à amortir le contact entre ledit auget (18, 20) et ladite butée (62).

9. Dispositif de mesure de la quantité d'un fluide écoulé pendant un intervalle de temps donné, ledit dispositif comprenant un dispositif de récupération selon l'une quelconque des revendications 1 à 8 et des moyens de mesure de la quantité de fluide écoulé pendant un intervalle de temps donné en fonction du basculement des augets (18, 20) du dispositif de récupération.

10. Dispositif de mesure selon la revendication 9, **caractérisé en ce que** les moyens de mesure de la quantité de fluide, écoulé pendant un intervalle de temps donné, en fonction du basculement des augets (18, 20), comprennent des moyens de fermeture d'un circuit électrique (70) agencés pour fermer ledit circuit alternativement lorsque le dispositif de réception (6) est dans la première et dans la deuxième positions.

11. Pluviomètre permettant de mesurer la quantité de précipitations tombée pendant un intervalle de temps donné, **caractérisé en ce que** ledit pluviomètre comprend un dispositif de mesure (1) selon la revendication 9 ou 10, l'orifice d'écoulement (4) du fluide dudit dispositif étant agencé pour recevoir une partie des précipitations dont la quantité est à mesurer.

## Patentansprüche

1. Vorrichtung (1) zur Rückgewinnung eines Fluids, umfassend eine Öffnung (4) zum Ausfließen des Fluids in Fluidverbindung mit einer Vorrichtung (6) zum Aufnehmen des Fluids, wobei die Vorrichtung eine erste (18) und eine zweite (20) Wanne umfasst und zwischen einer ersten Position, in welcher der Boden (30) der ersten Wanne (18) der Ausflussöffnung (4) gegenüberliegt, und einer zweiten Position, in welcher der Boden (30) der zweiten Wanne (20) der Ausflussöffnung (4) gegenüberliegt, drehbar montiert ist, wobei der Übergang von einer Position in die andere erfolgt, wenn eine der Wannen (18, 20) eine vorbestimmte Fluidmenge enthält, die zu einer Kippbewegung derselben führt, wobei jede Wanne (18, 20) eine Ausgusswand (24) aufweist, die sich von dem Boden (30) der Wanne (18, 20) aus in einer Richtung erstreckt, die zu der anderen Wanne (18, 20) entgegengesetzt ist, **dadurch gekennzeichnet, dass** die Aufnahmevorrichtung (6) ferner eine erste (34) und eine zweite (36) Ablenkvorrichtung umfasst, die jeweils zwischen der ersten (18) und der zweiten (20) Wanne und der Ausflussöffnung (4) des Fluids eingeschoben sind, wobei die erste (34) bzw. die zweite (36) Ablenkvorrichtung eine Ablenkwand (38) umfasst, die angeordnet ist, um den Ausfluss des Fluids auf eine Zone (56) der Ausgusswand (24) der ersten (18) bzw. der zweiten (20) Wanne zu verlagern, die im Verhältnis zu dem Boden (30) der Wanne versetzt ist, wenn sich die Vorrichtung (6) in ihrer ersten bzw. ihrer zweiten Position befindet.

2. Rückgewinnungsvorrichtung nach Anspruch 1, **dadurch gekennzeichnet, dass** jede Ablenkvorrichtung (34, 36) ferner eine Ausgusswand (44) umfasst, wobei die Ausgusswand (44) der zweiten Ablenkvorrichtung (36) in Fluidkommunikation mit der ersten Wanne (18) steht, wenn sich die Aufnahmevorrichtung (6) in ihrer ersten Position befindet, und wobei die Ausgusswand (44) der ersten Ablenkvorrichtung (34) in Fluidkommunikation mit der zweiten Wanne (20) steht, wenn sich die Aufnahmevorrichtung (6) in ihrer zweiten Position befindet.

3. Rückgewinnungsvorrichtung nach Anspruch 2, **dadurch gekennzeichnet, dass** die Ausgusswände (44) angeordnet sind, um das Fluid dazwischen zurückzuhalten, wenn sich die Aufnahmevorrichtung (6) in einer mittleren Position zwischen der ersten und der zweiten Position befindet.

4. Rückgewinnungsvorrichtung nach Anspruch 2 oder 3, **dadurch gekennzeichnet, dass** sich die Ausgusswand (44) einer Ablenkvorrichtung (34, 36) von dem Rand gegenüber der Ausflussöffnung (4) der Ablenkwand (44) aus zu den Wannen (18, 20) erstreckt.

5. Rückgewinnungsvorrichtung nach Anspruch 4, **dadurch gekennzeichnet, dass** der Winkel (α), der zwischen der Ablenkwand (38) der Ausgusswand (44) einer Ablenkvorrichtung (34, 36) gebildet ist, im Wesentlichen zwischen 40° und 48° liegt.

6. Rückgewinnungsvorrichtung nach einem der Ansprüche 1 bis 5, **dadurch gekennzeichnet, dass** die erste (34) bzw. die zweite (36) Ablenkvorrichtung drehbar beweglich ist, so dass sich das freie Ende der ersten (34) bzw. der zweiten (36) Ablenkvorrichtung dem Boden (30) der ersten (18) bzw. der zweiten (20) Wanne beim Übergang von der ersten in die zweite Position bzw. von der zweiten in die erste Position nähert.

7. Rückgewinnungsvorrichtung nach einem der Ansprüche 1 bis 6, **dadurch gekennzeichnet, dass** die erste und die zweite Wanne (18, 20) eine gemeinsame Wand (22) umfassen, wobei die Schnittstelle zwischen der gemeinsamen Wand (22) und der Ausgusswand (24) der ersten (18) bzw. der zweiten (20) Wanne den Boden (30) der ersten (18) bzw. der zweiten (20) Wanne bildet, wobei die erste und die zweite Wanne (18, 20) im Verhältnis zu einer Symmetrieebene, die durch die gemeinsame Wand (22) geht, zueinander im Wesentlichen symmetrisch sind.

8. Rückgewinnungsvorrichtung nach einem der Ansprüche 1 bis 7, **dadurch gekennzeichnet, dass** die erste (18) bzw. die zweite (20) Wanne beim Übergang von der ersten in die zweite Position bzw. von der zweiten in die erste Position in Kontakt mit einem Anschlag (62) kommt, wobei der Anschlag (62) unter der Einwirkung des Kontakts mit der Wanne (18, 20) drehbar beweglich ist, um den Kontakt zwischen der Wanne (18, 20) und dem Anschlag (62) zu dämpfen.

9. Vorrichtung zum Messen der Menge eines Fluids, das während eines bestimmten Zeitraums ausgeflossen ist, wobei die Vorrichtung eine Rückgewinnungsvorrichtung nach einem der Ansprüche 1 bis 8 und Mittel zum Messen der Menge des Fluids, das während eines bestimmten Zeitraums ausgeflossen ist, in Abhängigkeit von der Kippbewegung der Wannen (18, 20) der Rückgewinnungsvorrichtung umfasst.

10. Messvorrichtung nach Anspruch 9, **dadurch gekennzeichnet, dass** die Mittel zum Messen der Menge eines Fluids, das während eines bestimmten Zeitraums ausgeflossen ist, in Abhängigkeit von der Kippbewegung der Wannen (18, 20) Mittel zum Schließen eines Stromkreises (70) umfassen, die angeordnet sind, um den Kreis abwechselnd zu schließen, wenn sich die Aufnahmevorrichtung (6) in der ersten und in der zweiten Position befindet.

11. Regenmesser, der es ermöglicht, die Menge von Niederschlägen zu messen, die während eines bestimmten Zeitraums gefallen sind, **dadurch gekennzeichnet, dass** der Regenmesser eine Messvorrichtung (1) nach Anspruch 9 oder 10 umfasst, wobei die Ausflussöffnung (4) des Fluids der Vorrichtung angeordnet ist, um einen Teil der Niederschläge aufzunehmen, deren Menge zu messen ist.

## Claims

1. A recovery device (1) for a fluid, comprising a flow orifice (4) for the fluid in fluid communication with a receiving device (6) of said fluid, said device comprising a first (18) and second (20) bucket and being mounted rotating between a first position, in which the bottom (30) of the first bucket (18) is across from the flow orifice (4), and a second position, in which the bottom (30) of the second bucket (20) is across from the flow orifice (4), the passage from one position to the other being done when one of the buckets (18, 20) contains a predetermined quantity of fluid causing it to tilt, each bucket (18, 20) having a pouring wall (24) extending from the bottom (30) of said bucket (18,20) along an opposite direction to the other bucket (18, 20), **characterized in that** the receiving device (6) further comprises a first (34) and second (36) deflector, interposed respectively between the first (18) and second (20) buckets and the flow orifice (4) of the fluid, the first (34), second (36), respectively, deflector comprising a deflecting wall (38) arranged to offload the flow of the fluid onto a zone (56) of the pouring wall (24) of the first (18), second (20), respectively, bucket offset relative to the bottom (30) of said bucket when the device (6) is in its first, second, respectively, position.

2. The recovery device according to claim 1, **characterized in that** each deflector (34, 36) further comprises a pouring wall (44), the pouring wall (44) of the second deflector (36) being in fluid communication with the first bucket (18), when the receiving device (6) is in its first position, and the pouring wall (44) of the first deflector (34) being in fluid communication with the second bucket (20), when the receiving device (6) is in its second position.

3. The recovery device according to claim 2, **characterized in that** the pouring walls (44) are arranged to retain the fluid between them when the receiving device (6) is at an intermediate position between the first and second positions.

4. The recovery device according to claim 2 or 3, **characterized in that** the pouring wall (44) of a deflector (34, 36) extends from the edge across from the flow orifice (4) of the deflecting wall (44) toward the buckets (18, 20).

5. The recovery device according to claim 4, **characterized in that** the angle (α) formed between the deflecting wall (38) and the pouring wall (44) of a deflector (34, 36) is substantially comprised between 40° and 48°.

6. The recovery device according to any one of claims 1 to 5, **characterized in that** the first (34), second (36), respectively, deflector is rotatable such that the free end of the first (34), second (36) deflector, respectively, comes closer to the bottom (30) of the first (18), second (20) bucket, respectively, during the passage from the first to the second position, from the second to the first position, respectively.

7. The recovery device according to any one of claims 1 to 6, **characterized in that** the first and second buckets (18, 20) comprise a shared wall (22), the intersection between the shared wall (22) and the pouring wall (24) of the first (18), second (20) bucket, respectively, forming the bottom (30) of said first (18), said second (20), bucket, respectively, the first and second buckets (18, 20) being substantially symmetrical relative to one another with a plane of symmetry passing through said shared wall (22).

8. The recovery device according to any one of claims 1 to 7, **characterized in that** the first (18), second (20) bucket, respectively, comes into contact with a stop (62) during the passage from the first to the second position, from the second to the first position, respectively, said stop (62) being rotatable under the effect of the contact with the bucket (18, 20), so as to damp the contact between said bucket (18, 20) and said stop (62).

9. A device for measuring the quantity of a fluid having flowed during a given time interval, said device comprising a recovery device according to any one of claims 1 to 8 and means for measuring the quantity of fluid having flowed during a given time interval based on the tilting of the buckets (18, 20) of the recovery device.

10. The measuring device according to claim 9, **characterized in that** the means for measuring the quantity of fluid having flowed during a given time interval, based on the tilting of the buckets (18, 20), comprise means for closing an electric circuit (70) arranged to close said circuit alternately when the receiving device (6) is in the first and second positions.

11. A rain gauge making it possible to measure the quantity of precipitation having fallen during a given time interval, **characterized in that** said rain gauge comprises a measuring device (1) according to claim 9 or 10, the flow orifice (4) for the fluid of said device being arranged to receive part of the precipitation whereof the quantity is to be measured.
